# EUROPEAN PATENT APPLICATION

(11) **EP 2 127 858 A1**
(43) Date of publication of application: **02.12.2009**
(21) Application number: 08711528.3
(22) Date of filing: 19.02.2008
(51) Int. Cl.: B29D 30/48

(54) **TRANSFER DEVICE AND TRANSFER METHOD OF BEAD MEMBER**

(30) Priority: 13.03.2007 JP 2007063651
(71) Applicant: Bridgestone Corporation, Tokyo 104-8340 (JP)
(72) Inventor: TERAZONO, Toshiyuki, Kodaira-shi Tokyo 187-8531 (JP)
(74) Representative: Whalley, Kevin
(86) International application number: PCT/JP2008/052704
(87) International publication number: WO 2008/111369

(57) **Abstract**

When a bead member formed of a bead core and a bead filler is transferred, the occurrence of deformation in the bead filler is restricted, and the shape accuracy thereof is improved. A plurality of supporting pawls (31) provided on a transfer apparatus (20) are brought into contact with an inside diameter portion of a bead core (51) of a bead member (50) to support it at a plurality of points in the circumferential direction, from the inner circumferential side. At the same time, an end of a bead filler (52) is sucked and supported by suction pads (41) joined to the supporting pawls (31) via joint members (42). The bead member (50), while being held at the respective parts, is removed from a forming apparatus (70), is moved to a cartridge for storage, and is placed on a placing surface of the cartridge. Thereafter, the suction holding of the bead filler (52) is released and the supporting pawls (31) are moved away from the inside diameter portion of the bead core (51), thus transferring the bead member (50) onto the cartridge.

## Description

### Technical Field

The present invention relates to apparatuses and methods for transferring a bead member in which the bead member, formed by attaching a bead filler to the outer circumference of a bead core, is removed from a forming apparatus thereof and is placed on a cartridge for the bead member, and, more specifically, it relates to an apparatus and a method for transferring a bead member in which deformation of the bead filler to be transferred to the cartridge is restricted.

### Background Art

In general, pneumatic tires have a pair of bead portions each including a substantially ring-shaped bead core composed of, for example, a bead wire, and a bead filler that has a substantially triangular cross section and extends radially outward of the tire from the outer circumference side of the bead core. Ends of a carcass layer are wrapped from the inside to the outside of the tire so as to cover the circumferences of the aforementioned components, thus forming the bead portions. Although the bead core and the bead filler are sometimes formed separately and are arranged in the bead portion when a green tire (raw tire) is built, in recent years, from the standpoint of productivity improvements etc., it is widely performed that, after the bead filler is preliminarily attached to and integrated with the outer circumference of the bead core, they are arranged in the bead portion when the green tire is built.

Conventionally, as a forming apparatus for a bead member composed of a bead core and a bead filler, there is known a forming apparatus that laminates unvulcanized ribbon-like rubber around the outer circumference of a bead core to form a bead filler having a predetermined cross section (see Patent Document 1).

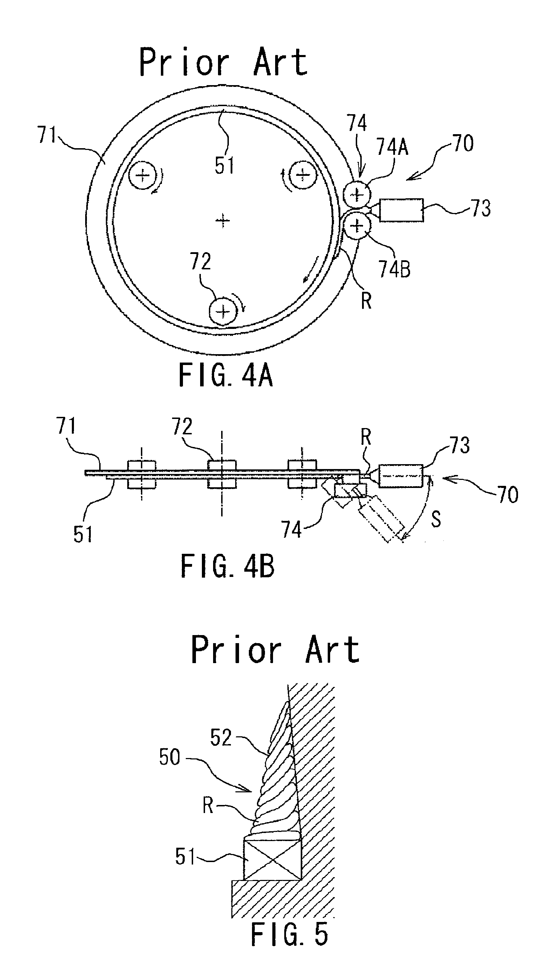

FIG. 4 is schematic views showing the relevant part of the conventional bead-member forming apparatus, in which FIG. 4A is a side view of a bead core 51 viewed in the axial direction, and FIG. 4B is a plan view of the bead core 51 viewed from above in the radial direction.
The forming apparatus 70 includes, as shown in the drawing, a substantially ring-shaped lamination plate 71 that holds the bead core 51 so as to be concentric therewith and is rotatable about the axis, rotation means 72 that simultaneously rotates the bead core 51 and the lamination plate 71 about the axis, an extruder 73 that extrudes unvulcanized rubber and continuously feeds a ribbon-like rubber R having a predetermined cross section, and lamination means 74, consisting of a pair of rollers 74A and 74B opposed to each other, that attaches and laminates the ribbon-like rubber R to the bead core 51 and the lamination plate 71.

In this bead-member forming apparatus 70, after the ribbon-like rubber R fed from the extruder 73 is allowed to pass between the pair of rollers 74A and 74B of the lamination means 74 so that it has a predetermined cross section, the ribbon-like rubber R is attached to the outer circumferential surface of the axially rotating bead core 51 and the side surface of the lamination plate 71 at the bead core 51 by one of the rollers (in FIG. 4A, the lower roller 74B). At the same time, by moving the extruder 73 and the lamination means 74 such that they are rotated in a horizontal plane (arrow S in FIG. 4B) about an attaching position of the ribbon-like rubber R, the ribbon-like rubber R is laminated while the attaching angle thereof is changed. Thus, the bead filler and the bead member are formed.

FIG. 5 is a cross-sectional view schematically showing a bead member 50 formed by the forming apparatus 70.
With the conventional forming apparatus 70, as shown in the drawing, when the ribbon-like rubber R is laminated, the size (area, thickness, etc.) of the cross section of the ribbon-like rubber R is changed so as to be gradually reduced from the outer circumferential surface side of the bead core 51 toward an end of a bead filler 52. Thus, the bead filler 52 is formed into a predetermined tapered shape with the thickness thereof being gradually reduced toward the end (substantially triangular cross section) and is formed to have a predetermined thickness and length (height) by which it extends radially outward of the bead core 51. Then, the bead core 51 and the bead filler 52 are assembled together to form the bead member 50.

The bead member 50 having been formed as described above is removed from the forming apparatus 70 and is then temporarily stored until it is used to build a green tire. However, there are problems in that, because the bead members 50 are composed of unvulcanized rubber or the like, deformation tends to occur mainly in the bead filler 52 during the transfer and storage, and the bead members 50 tend to stick to one another. Therefore, conventionally, the bead members 50 are each placed in a cartridge for storage so as to prevent the bead members 50 from touching one another or being deformed, to maintain the shape of the bead filler 52. At the same time, the bead members 50, when removed from the forming apparatus 70 and placed in the cartridges, need to be transferred while deformation thereof is restricted. As an apparatus for that, conventionally, there is known a transfer apparatus that holds the bead core 51 of the bead member 50 from the inside so as to support it at a plurality of points in an inside diameter portion and transfers it (see Patent Document 2).

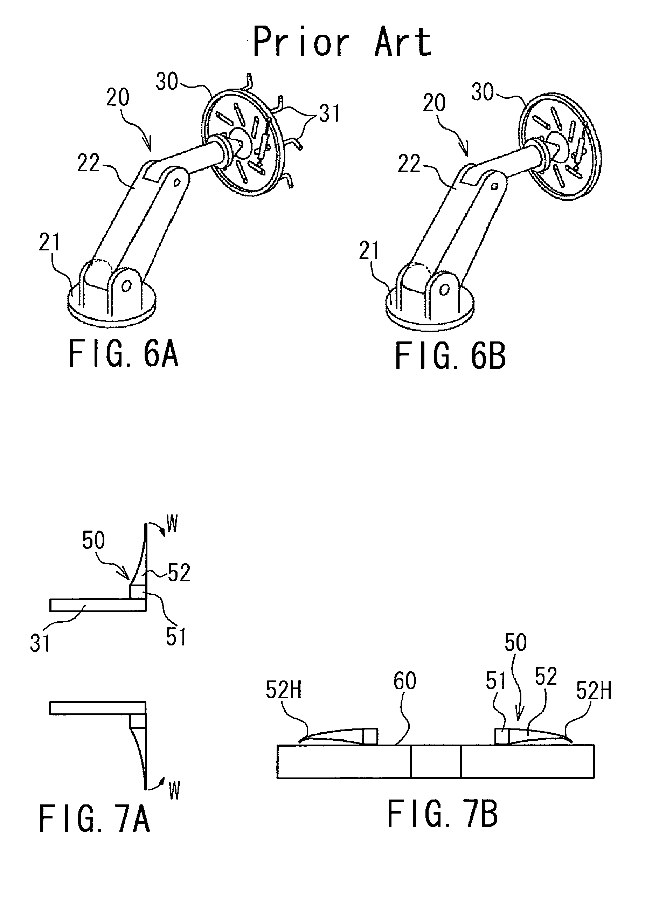

FIG. 6 is schematic views for explaining a mechanism of the conventional transfer apparatus (handling robot) for the bead member 50.
As shown in the drawing, a transfer apparatus 20 includes a substantially disc-shaped base 21 that is attached to a fixing stage, floor, or the like, and turns (rotates) in the circumferential direction at the attached position, an articulated arm 22 that is connected to the top surface of the base 21, and a substantially disc-shaped hand 30 that is connected to an end of the articulated arm 22 so as to be tiltable.

The hand 30 has a surface on one side (in the drawing, left side) connected to the end of the articulated arm 22 at substantially the central portion thereof, and has a surface on the other side (in the drawing, right side) provided with a plurality of rod-shaped or L-shaped (herein, L-shaped) supporting pawls 31 that are arranged substantially at equal intervals in the circumferential direction so as to be capable of expansion/contraction displacement (displacement between the states shown in FIGS. 6A and 6B) in the radially inward and outward directions in conjunction with one another. The hand 30 is holding means that removably holds the bead core 51 during the transfer etc., of the formed bead member 50, and holds the bead core 51 and the bead member 50 so as to support the inside diameter portion of the bead core 51 at a plurality of points by expanding the plurality of supporting pawls 31 at a position radially inward of the bead member 50 to bring the supporting pawls 31 into contact with the radially inside (inside diameter portion) of the bead member 50 (bead core 51).

The transfer apparatus 20 turns the base 21 while rotating(folding)the articulated arm 22 at the joint positions so as to move the hand 30, about the base 21, to an arbitrary position in the movable range of the end of the articulated arm 22. At the same time, by combining the tilt displacement of the hand 30, the direction in which the surface having the supporting pawls 31 faces is changed to move the supporting pawls 31 to predetermined positions. In this manner, the transfer apparatus 20 moves the hand 30 to a position opposite the lamination plate 71 of the forming apparatus 70 for the bead member 50 (see FIG. 4), allows the supporting pawls 31 to grip the bead member 50 from the inside so as to support the inside diameter portion of the bead core 51, and then moves the hand 30 away from the lamination plate 71, to remove the bead member 50 from the forming apparatus 70. Thereafter, the bead member 50 is moved while being held at the bead core 51 and is placed on the cartridge after performing, for example, a weight measuring test or the like. Then, the supporting pawls 31 are displaced to a reduced-diameter position to release the holding of the bead core 51. Thereafter, the bead member 50 is conveyed and stored in a state of being placed in the cartridge until it is used to build a green tire. Conventionally, the removal of the bead member 50 from the forming apparatus 70 is sometimes performed by a transfer apparatus that moves in the transverse direction. In such a case, the transfer apparatus 20 is used when the bead member 50 is transferred from the transfer apparatus to the cartridge.

During the above-described transfer of the bead member 50, the transfer apparatus 20 supports and holds the bead core 51, which is less likely to deform (see FIG. 5), at a plurality of points in the inside diameter portion to restrict deformation of the bead member 50 occurring during holding and transfer. However, even when the bead member 50 is held in this manner, because the bead filler 52 attached to the bead core 51 tends to maintain the shape thereof only by the rigidity thereof, it is difficult to restrict deformation thereof, and, in particular, when the thickness is reduced, deformation tends to occur more easily.

FIG. 7 is schematic views for explaining such deformation of the bead filler 52, though it is not disclosed in the Patent Documents.
FIGS. 7A and 7B are cross-sectional views in the radial direction of the bead member 50, showing a state in which the bead core 51 of the bead member 50 is held by the supporting pawls 31 of the transfer apparatus 20, and a state in which the bead member 50 is placed on a substantially ring-shaped cartridge 60, respectively. The supporting pawls 31 shown in FIG. 7A are rod-shaped pawls, and the drawing shows only two of the plurality of supporting pawls 31, the two supporting the inside diameter portion of the bead core 51 at two points in the top-bottom direction.

When the bead member 50 is removed from the forming apparatus 70 and is held by the supporting pawls 31, as shown in FIG. 7A, the bead core 51 being held is substantially maintained in the shape before being removed (during forming). However, the bead filler 52 extending from the outer circumferential surface thereof in a tapered shape tends to deform in the thickness direction because of its shape in addition to that it is composed only of relatively soft unvulcanized rubber immediately after forming, and tends to deform toward the lamination plate 71 (see FIG. 4) immediately after the removal from the forming apparatus 70 and deform into a curve shape (arrow W in FIG. 7A) at the end (outer circumferential end). As a result, deformation of the bead filler 52 progresses mainly at the end portion during the transfer to the cartridge 60, and, as shown in FIG. 7B, a deformation 52H, such as curving or bending, may occur mainly at the end of the bead filler 52 placed on the cartridge 60.

In particular, because the bead filler 52 having what is called a slim-high structure, in which the bead filler 52 is formed in an elongated shape to improve the controllability and riding quality of the tire, has a great height (length) in the radial direction and a small thickness at the end portion, deformation occurs more easily. This increases deformation, such as curving, during the transfer and decreases the shape accuracy, and there is a possibility that the bead filler 52 with a relatively large deformation at the end is placed on the cartridge 60 to be stored. The bead member 50 having such a bead filler 52 requires correction of deformation when mounted on a green tire, resulting in a problem in that the operation efficiency decreases.

[Patent Document 1] Japanese Unexamined Patent Application, Publication No. 2006-76200
[Patent Document 2] Japanese Unexamined Patent Application, Publication No. 2005-111786

### Disclosure of Invention

### Problems to be Solved by the Invention

The present invention has been made in view of the above-described conventional problems, and an object thereof is to restrict the occurrence of deformation in a bead filler during the transfer of a formed bead member, and to improve the shape accuracy thereof.

### Means for Solving the Problems

A first aspect of the invention is an apparatus for transferring a bead member, the apparatus moving and placing the bead member, which is formed by attaching a bead filler to the outer circumference of a bead core, on a cartridge, the apparatus including bead-core holding means for removably holding the bead core of the bead member, bead-filler holding means for removably holding an end of the bead filler of the bead member, and moving means for simultaneously moving the bead-core holding means holding the bead member and the bead-filler holding means to the cartridge. The bead member is moved and transferred to the cartridge while being held at the bead core and the end of the bead filler.
In the apparatus for transferring a bead member according to the above aspect, the bead-filler holding means may be suction holding means that holds the end of the bead filler with suction.
In the apparatus for transferring a bead member according to the above aspect, the bead-core holding means and the bead-filler holding means may respectively have a plurality of support means that support the bead core and a plurality of support means that support the end of the bead filler at a plurality of points in the circumferential direction of the bead member.
In the apparatus for transferring a bead member according to the above aspect, the support means of the bead-core holding means and the support means of the bead-filler holding means may be configured to be joined together.
In the apparatus for transferring a bead member according to the above aspect, the plurality of support means of the bead-core holding means may be support members capable of displacement in directions toward and away from one another, and the plurality of support members may be brought into contact with an inside diameter portion of the bead core of the bead member to support the bead core.
A second aspect of the invention is a method for transferring a bead member in which the bead member formed by attaching a bead filler to the outer circumference of a bead core is moved and placed on a cartridge, the method including a step of holding the bead core of the bead member, a step of holding an end of the bead filler of the bead member, a step of moving the bead member to the cartridge while the bead core and the end of the bead filler are held, a step of placing the moved bead member onto a placing surface of the cartridge, and a step of releasing the holding of the bead core and the end of the bead filler of the bead member placed on the cartridge.
The method for transferring a bead member according to the above aspect may further include a step of disposing the placing surface of the cartridge vertically. In the step of placing, the bead member is brought into contact with the vertical placing surface of the cartridge to be placed thereon.

### Advantages

The present invention can restrain the occurrence of deformation in a bead filler during the transfer of a formed bead member, and can improve the shape accuracy.

### Brief Description of Drawings

[FIG. 1] FIG. 1 is schematic views showing the operation of removing a bead member from a forming apparatus with a transfer apparatus according to this embodiment.
[FIG. 2] FIG. 2 is schematic views showing the operation of placing the bead member on a cartridge with the transfer apparatus according to this embodiment.
[FIG. 3] FIG. 3 is a schematic view showing another example of the transfer apparatus according to this embodiment.
[FIG. 4] FIG. 4 is schematic views showing a relevant part of a conventional bead-member forming apparatus.
[FIG. 5] FIG. 5 is a schematic cross-sectional view showing a bead member formed by the conventional bead-member forming apparatus.
[FIG. 6] FIG. 6 is schematic views for explaining the mechanism of a conventional apparatus for transferring a bead member.
[FIG. 7] FIG. 7 is schematic views for explaining deformation of a bead filler of the bead member.

### Reference Numerals

20: apparatus for transferring a bead member, 31: supporting pawls, 40: bead-filler holding means, 41: suction pad, 42: joint member, 43: connecting tube, 50: bead member, 51: bead core, 52: bead filler, 60: cartridge, and 61: placing surface.

### Best Mode for Carrying Out the Invention

An embodiment of the present invention will be described below with reference to the drawings.
Similarly to the above-described transfer apparatus (see FIGS. 6 and 7), an apparatus for transferring a bead member according to this embodiment removes a bead member 50 (see FIG. 5), which is formed by attaching a bead filler 52 to the outer circumference of the bead core 51, from a forming apparatus 70 (see FIG. 4) for the bead member 50 and places (transfers) it on a substantially ring-shaped cartridge 60 for storage.

That is, a transfer apparatus 20 (see FIG. 6) includes a rotatable base 21, an articulated arm 22 joined to the base 21, and a substantially disc-shaped holder 30 joined to the tip of the articulated arm 22 so as to be tiltable. Furthermore, a plurality of (for example, eight) supporting pawls 31, which serve as supporting members, are arranged substantially at equal intervals in the circumferential direction of the holder 30 so as to be capable of expansion/contraction displacement with respect to the radial positions thereof, constituting bead-core holding means that removably holds the bead core 51 of the bead member 50.

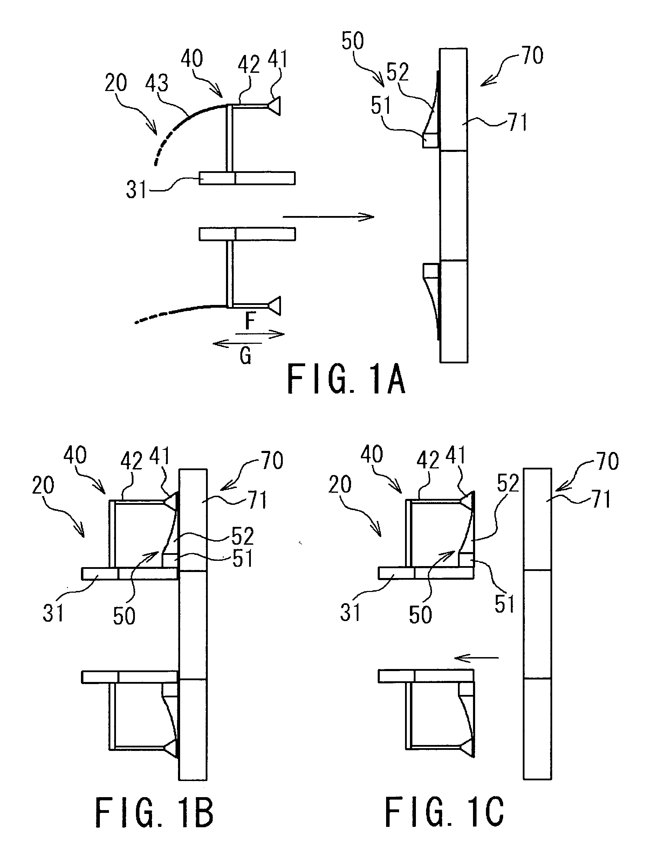

FIG. 1 is schematic views showing the operation of removing the bead member 50 from the forming apparatus 70 with the transfer apparatus 20, each showing a cross section in the radial direction of the bead member 50.
In the drawings, only the tips of the supporting pawls 31 of the transfer apparatus 20 are shown. Although, among the plurality of supporting pawls 31, only two supporting pawls 31 that support the inside diameter portion of the bead core 51 at two points in the top-bottom direction are shown, the plurality of supporting pawls 31 have substantially the same rod shape and are arranged substantially in parallel with one another on the transfer apparatus 20 (holder 30) (see FIG. 6), and they are synchronously displaced so as to move toward or away from one another while maintaining a substantially parallel state.

As shown in FIG. 1A, the transfer apparatus 20 includes a bead-filler holding means 40 that removably holds an end (outer circumferential end) (in the drawing, the top and bottom ends) of the bead filler 52 of the bead member 50, and herein, the bead-filler holding means 40 is formed integrally with the supporting pawls 31, which serve as the holding means of the bead core 51. The bead-filler holding means 40 is suction holding means that holds the end of the bead filler 52 with suction, and includes suction pads 41 provided in the same number as the plurality of supporting pawls 31, joint members 42 that join the suction pads 41 and the supporting pawls 31, deformable connecting tubes 43 connecting the suction pads 41 to exhaustion means (not shown), such as a vacuum pump, disposed on the outside, and a moving mechanism (not shown), such as a piston-and-cylinder mechanism, that moves the suction pads 41 in the front-rear direction (directions of arrows F and G in FIG. 1A).

The suction pads 41 are made of an elastic material capable of flexible deformation, such as rubber, and are formed in the shape of a trumpet, in which the diameter increases toward an end, having such a size that they suck only the end of the bead filler 52 and provide sufficient suction force. The suction pads 41 suck and support the end of the bead filler 52 with a predetermined suction force by exhausting the air between the inside of the trumpet shape and a member pressed against the openings at the end (herein, the bead filler 52) with exhaustion means so that the pressure is reduced, and release the suction and support of the bead filler 52 by stopping the exhausting and recovering the pressure.

Each joint member 42 is attached to a position a predetermined distance away from the tip portion (in the drawings, the right end) of the supporting pawl 31, which is brought into contact with the bead core 51 to support it, and is formed in a substantially L shape that extends radially outward from the supporting pawl 31 and is bent midway toward the tip portion of the supporting pawl 31 substantially at right angles. Furthermore, the joint members 42 have the suction pads 41 attached to the tips thereof, arrange the suction pads 41 at predetermined positions with respect to the tip portions of the supporting pawls 31, and support them so as to be movable in the front-rear direction (directions of arrows F and G in FIG. 1A). Thus, the joint members 42 arrange the suction pads 41 such that, for example, the suction pads 41 come in contact with the end of the bead filler 52 while the tip portions of the supporting pawls 31 are in contact with the inside diameter portion of the bead core 51 of the bead member 50.

Next, the process of removing the bead member 50 from the forming apparatus 70 (see FIG. 4) with the transfer apparatus 20 will be described.
The following process is controlled by a control unit (not shown), which consists of, for example, a microcomputer etc., connected to the transfer apparatus 20, and is automatically performed according to a predetermined program, in conjunction with the above-described turning of the base 21 (see FIG. 6), bending of the joint portions of the articulated arm 22, and tilting of the holder 30, etc. Furthermore, the plurality of supporting pawls 31 are, for example, synchronously displaced substantially symmetrically with respect to the center line located at substantially the same distance from them, and similarly, the suction etc., by the plurality of suction pads 41 is synchronously performed.

As shown in FIG. 1A, the transfer apparatus 20 first moves the supporting pawls 31 and the bead-filler holding means 40 to a position opposite the lamination plate 71 of the forming apparatus 70, and then moves the suction pads 41 with the above-described moving mechanism (not shown) so that the suction pads 41 are positioned on the back of the tips of the supporting pawls 31 (in the arrow G direction in FIG. 1A). Next, the positions of the supporting pawls 31 are displaced so as to be located inward of the inside diameter portion of the bead core 51, and the supporting pawls 31 are moved toward the lamination plate 71, substantially in parallel with the axial direction thereof to position the tip portions of the supporting pawls 31 radially inward of the bead core 51. Next, as shown in FIG. 1B, the supporting pawls 31 are displaced toward the radially outward of the bead core 51 so that the tip portions of the supporting pawls 31 come into contact with the radially inward (inside diameter portion) of the bead core 51 to support the inside diameter portion of the bead core 51 at a plurality of points. At the same time, the suction pads 41 are moved forward (toward the bead filler 52) (in the arrow F direction in FIG. 1A) to be brought into contact with the end of the bead filler 52, whereby the suction pads 41 suck and support the bead filler 52.

After the bead core 51 of the bead member 50 on the forming apparatus 70 is held by the supporting pawls 31 and the end of the bead filler 52, provided on the outer circumference side thereof, is held by the bead-filler holding means 40 (suction pads 41) in this manner, the bead member 50, in this state, is removed from the forming apparatus 70. More specifically, first, while the bead member 50 is held, the bead member 50 is separated from the lamination plate 71 with separating means (not shown) of the forming apparatus 70 by, for example, causing a plurality of separating plates to project from the surface of the lamination plate 71 at the bead member 50 through a plurality of slits (not shown) penetrating the lamination plate 71. Next, as shown in FIG. 1C, the bead-filler holding means 40 and the supporting pawls 31 holding the bead member 50 (the bead core 51 and the bead filler 52) are moved substantially in parallel with the axial direction of the lamination plate 71, removing and separating the bead member 50 from the lamination plate 71. Thus, while the bead member 50 and the lamination plate 71 are maintained substantially in parallel with each other, they are separated substantially equally and uniformly in the circumferential direction of the bead member 50. Thus, the bead member 50, while being maintained in a state (shape, orientation, etc.,) during forming, is removed from the forming apparatus 70. Then, the bead member 50, held at the bead core 51 and the end of the bead filler 52, is moved to the cartridge, and the bead member 50, in this state, is placed (transferred) on the placing surface of the cartridge.

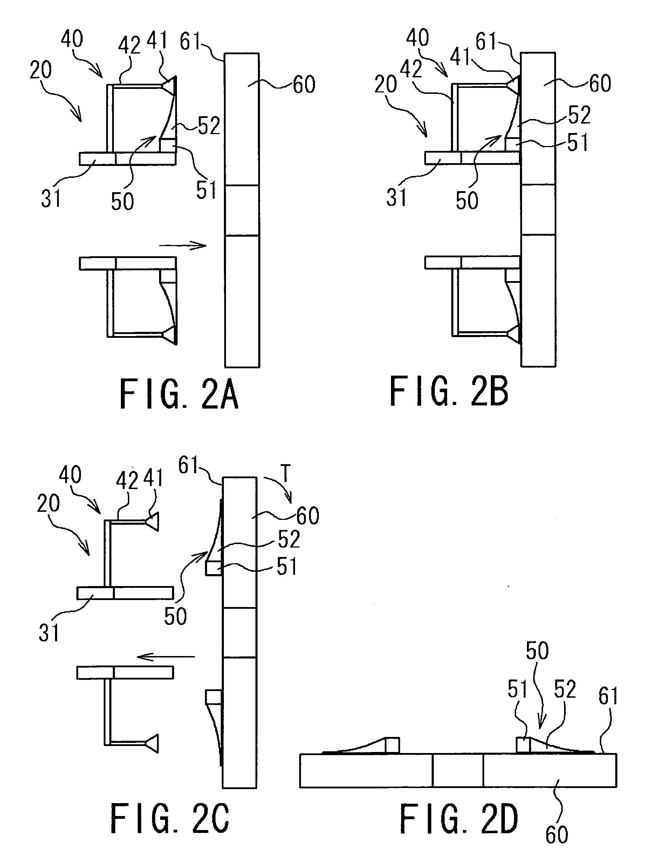

FIG. 2 is schematic views showing the operation of placing the bead member 50 on the cartridge 60 with the transfer apparatus 20, each showing a cross section in the radial direction of the bead member 50.
The cartridge 60 temporarily stores one formed bead member 50 placed on a placing surface 61, while maintaining the shape thereof at the time of forming, until it is used to build a green tire, and prevents the bead member 50 (in particular, the bead filler 52) from being deformed during placement or storage, by shaping the external shape, the placing surface 61, or the like to conform to the shape of the bead member 50 to be placed thereon.

Herein, the cartridge 60 is substantially ring-shaped having an outside diameter larger than the outside diameter of the bead member 50 and an inside diameter smaller than the inside diameter of the bead member 50. The placing surface 61 is formed in the shape conforming to the contact surface of the bead member 50 to be placed thereon, and both surfaces are brought into contact with each other without leaving a gap therebetween. Thus, the bead member 50 placed thereon is prevented from being deformed and the shape thereof at the time of forming (placement) is maintained. In addition, although not shown, a peripheral wall that is higher than the thickness of the bead member 50 is provided along the outer circumference edge of the cartridge 60 to store the bead member 50 inside the wall. This prevents the bead members 50 from touching one another during storage and enables the cartridges 60 to be stored in a stacked state.

As shown in FIG. 2A, when the bead member 50 is placed on the cartridge 60, first, the cartridge 60 is disposed at a predetermined transfer position such that the placing surface 61 thereof is vertical (in the drawing, in the top-bottom direction) by disposing means (not shown) for moving the cartridge 60 and disposing it at a predetermined position in a predetermined state. Next, the transfer apparatus 20 moves the supporting pawls 31 and the bead-filler holding means 40 to move the bead member 50 to the transfer position and dispose it such that it is substantially parallel with and concentric with the placing surface 61 of the cartridge 60. Then, the bead member 50, in this state, is moved toward the cartridge 60 (in the drawing, to the right side), and, as shown in FIG. 2B, the bead member 50 is placed on the placing surface 61 of the cartridge 60. At this time, in this embodiment, the bead member 50 is brought into contact with the vertical placing surface 61 of the cartridge 60, and the bead member 50 is placed and held on the placing surface 61 by retaining the bead core 51 and the bead filler 52 with a retaining member (not shown), for example, a retaining bar or the like, provided on the above-described disposing means or the like of the cartridge 60.

Next, suction by the suction pads 41 is stopped to release the end of the bead filler 52 held by the bead-filler holding means 40, and the suction pads 41 are moved backwards to be separated from the bead filler 52. Then, the supporting pawls 31 are moved radially inward of the bead member 50 and axially outward thereof to release holding of the bead core 51. Next, as shown in FIG. 2C, the supporting pawls 31 and the bead-filler holding means 40 are moved away from the cartridge 60, and the cartridge 60, on which the bead member 50 is placed, is tilted (arrow T in the drawing) so that the placing surface 61 is substantially horizontal as shown in FIG. 2D. Thereafter, the cartridge 60 is moved to a predetermined storage place and the bead member 50, the radial direction of which is substantially horizontal, is stored together with the cartridge 60. On the other hand, the transfer apparatus 20 repeats the above-described operation to transfer the next bead member 50 from the forming apparatus 70 to the next cartridge 60, and continuously performs transfer of the bead member 50 in conjunction with the forming apparatus 70 or the like.

As has been described, in this embodiment, when the bead member 50 is removed from the forming apparatus 70 to be moved and transferred to the cartridge 60, the bead core 51 is supported (held) by the supporting pawls 31 to be moved, and, at the same time, the end of the bead filler 52 is held. Thus, during the transfer including the removal, deformation in the thickness direction or the like occurring in the bead filler 52 can be restricted. This can restrict deformation occurring mainly at the end of the bead filler 52, such as, for example, curving and bending deformation at the end of the bead filler 52 (see FIG. 7) occurring in the conventional case, and the bead filler 52 can be moved and transferred to the cartridge 60 while being substantially maintained in the shape at the time of forming by the forming apparatus 70.

In particular, deformation can be effectively restricted even when the bead filler 52 is thin and elongated, i.e., has a slim-high structure, and, from the transfer through the storage, the shape thereof can be maintained in a predetermined shape. As a result, in addition to that the shape accuracy of the bead filler 52 can be improved, the attachment of the bead member 50 to a green tire becomes easy, improving the operation efficiency. Because the forming apparatus 70 forms the bead filler 52 at a higher temperature (from about 70°c to 110°c) than the room temperature, the bead filler 52 having a high temperature and in an extremely deformable state has to be moved during the transfer of the bead member 50. The transfer apparatus 20 and the transfer direction can assuredly prevent deformation occurring particularly during the movement (transfer) of the bead filler 52 having a higher temperature than the room temperature, whereby they are extremely effective and provide great advantages.

In this embodiment, because the bead member 50 is brought into contact with and placed on the placing surface 61 while the placing surface 61 of the cartridge 60 is vertical, the bead member 50 (bead filler 52) can be transferred to the cartridge 60 while maintaining the orientation at the time of forming. At the same time, because the downward deformation or the like due to gravity, caused by laying the bead filler 52 horizontally, can be restricted, deformation of the bead filler 52 occurring before the transfer can be further reduced. Moreover, with the transfer apparatus 20, because the bead core 51 and the end of the bead filler 52 are supported at a plurality of points in the circumferential direction of the bead member 50, they can be evenly supported in the circumferential direction, whereby deformation during the transfer can be more effectively restricted.

Herein, because the bead member 50 is moved while the weight thereof is mainly applied to the supporting pawls 31 that are in contact with the bead core 51, the end of the bead filler 52 may be supported by such a force that can restrict deformation thereof and does not apply an excess force to deform the bead filler 52. Accordingly, the bead-filler holding means 40 may be formed of another holding means capable of holding in that manner, for example, a clamping means etc., that holds the end portion of the bead filler 52 so as to clamp it. However, as in this embodiment, when the bead-filler holding means 40 is the suction holding means that sucks and holds the end of the bead filler 52, it is more desirable because it enables smooth and quick attachment/removal of the bead filler 52 and it causes relatively less damages, such as scratches, at the end of the bead filler 52, though it leaves traces, such as depressions, due to the suction.

Furthermore, herein, although the supporting pawls 31, which serve as the holding means of the bead core 51, and the bead-filler holding means 40 (suction pads 41) are joined together by the joint members 42, they may be formed separately without being joined together. However, in such a case, in order to cope with the different inside diameters of the bead core 51, to dispose the bead-filler holding means 40 at a predetermined position, and to prevent deformation of the bead member 50 during the transfer etc., the supporting pawls 31 and the bead-filler holding means 40 that support the bead member 50 (bead core 51 and the bead filler 52) need to be synchronously and simultaneously moved. Therefore, by integrally forming the supporting pawls 31 and the bead-filler holding means 40 as in the transfer apparatus 20, a mechanism or the like for synchronously moving them is unnecessary, simplifying the structure of the transfer apparatus 20 and making it possible to reduce the costs of producing the apparatus etc., which is more desirable.

Although the transfer apparatus 20 supports and holds the bead member 50 at a plurality of points in the circumferential direction, it is also possible that, for example, the suction pads 41 are disposed at two points, with a certain distance therebetween, on the upper side of the apparatus, and the bead filler 52 is sucked only at the upper side thereof, not the lower side, so as to be held in a suspended manner. Thus, the number and positions of the suction pads 41 are arbitrary. As long as a necessary number of suction pads 41 are appropriately disposed in the circumferential direction of the bead member 50 to suck the bead filler 52, the bead-filler holding means 40 may have a configuration that is different from above, by changing the number and positions thereof.

Although the bead core 51 is supported by the rod-shaped supporting pawls 31 in this embodiment, the bead core 51 may be supported in a contact manner by other support members capable of displacement in the directions toward and away from each other by, for example, bringing tip portions of L-shaped or Y-shaped support members or the outer circumferential surface of a substantially disc-shaped support member into contact with the inside diameter portion of the bead core 51. Furthermore, the holding means of the bead core 51 may be, besides the supporting pawls 31, one that holds the bead core 51 using another method, for example, a magnetic chuck that magnetically chucks and holds a side surface portion or the like of the bead core 51 with magnetic force.

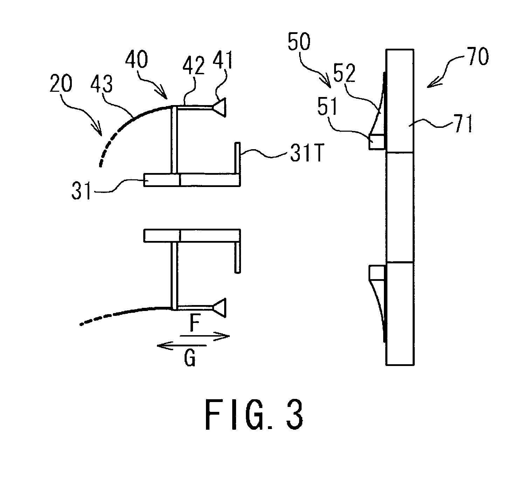

FIG. 3 is a schematic view showing another example of the transfer apparatus 20, in which the shape of the supporting pawls 31 is changed as described above, showing a cross section in the radial direction of the bead member 50, corresponding to FIG. 1A.
Herein, as shown in the drawing, the tips of the supporting pawls 31 are provided with rod-shaped projections 31T that protrude outward (in the drawing, upward and downward), and the supporting pawls 31 are formed in an L shape similarly to the transfer apparatus 20 shown in FIG. 6.

When the bead member 50 is removed from the forming apparatus 70 with the transfer apparatus 20, the supporting pawls 31 are sufficiently displaced to reduce the diameter and are moved toward one another, and then the tips of the projections 31T are positioned inward of the inside diameter portion of the bead core 51. Next, the supporting pawls 31 are moved toward the lamination plate 71 (arrow F in the drawing) to dispose the projections 31T at positions beyond the inside diameter portion of the bead core 51 and to dispose portions adjacent to the projections 31T of the supporting pawls 31 at positions radially inward of the bead core 51. In this state, the plurality of supporting pawls 31 are displaced radially outward, so that the projections 31T are inserted into grooves, slits, or the like (not shown) provided in a surface of the lamination plate 71 at the bead member 50 and are disposed behind the bead filler 52. The supporting pawls 31 are brought into contact with the inside diameter portion of the bead core 51 to support the inside diameter portion of the bead core 51. Thereafter, similarly to the above (see FIG. 1), while the bead-filler holding means 40 sucks and holds the bead filler 52, the bead-filler holding means 40 and the supporting pawls 31 are separated from the forming apparatus 70 (arrow G in the drawing), thus separating and removing the bead member 50 from the lamination plate 71.

At this time, the supporting pawls 31 can not only hold the bead core 51, but also support the bead member 50 and the bead filler 52 from the lamination plate 71 side with the projections 31T, and furthermore, they can apply force in a direction away from the lamination plate 71 to them.
As a result, the bead member 50 (especially, the bead filler 52), which tends to adhere to the lamination plate 71, can be more assuredly separated from the lamination plate 71, making the removal thereof from the forming apparatus 70 easy. Furthermore, because of the projections 31T, the bead filler 52 can be separated while being supported from the lamination plate 71 side. This enhances the effect of restricting deformation of bead filler 52 and further restricts deformation during separation, thereby further improving the shape accuracy of the bead filler 52.

As has been described, the projections 31T provided on the supporting pawls 31 serve as support members (means) that support the bead member 50 and the bead filler 52 from the side opposite the bead-filler holding means 40 during separation and movement, and also serve as separation assistance members as well as deformation restricting members (means) that assist the separation of the bead member 50 during separation while restricting deformation of the bead filler 52. Therefore, from the standpoint of enhancing the function as the aforementioned members and means to obtain a sufficient effect, it is more preferable that the projections 31T extend at least to the end of the bead filler 52 where deformation etc., particularly tend to occur, and be formed to have such a length that it can support the area including the end.

The bead member 50 may be, other than the one in which the bead filler 52 is formed by laminating the ribbon-like rubber R around the outer circumference of the bead core 51 (see FIG. 5), one in which the bead filler 52 and the like are formed by another method, for example, one in which the bead filler 52 is formed by wrapping, a substantially platelike (belt-like) rubber member having a predetermined cross-sectional shape around the outer circumference of the bead core 51. Furthermore, although this embodiment has been described taking the case where the bead member 50 is removed and moved from the forming apparatus 70 as an example, the transfer apparatus 20 can also be used in other transfer operations in which the formed bead member 50 is moved from a predetermined position before movement (holding) onto the cartridge 60, such as in the case where the formed bead member 50 is moved from the above-described transfer apparatus.

## Claims

1. An apparatus for transferring a bead member, the apparatus moving and placing the bead member, which is formed by attaching a bead filler to the outer circumference of a bead core, on a cartridge, the apparatus comprising:
bead-core holding means for removably holding the bead core of the bead member;
bead-filler holding means for removably holding an end of the bead filler of the bead member; and
moving means for simultaneously moving the bead-core holding means holding the bead member and the bead-filler holding means to the cartridge,
wherein the bead member is moved and transferred to the cartridge while being held at the bead core and the end of the bead filler.

2. The apparatus for transferring a bead member according to claim 1,
wherein the bead-filler holding means is suction holding means that holds the end of the bead filler with suction.

3. The apparatus for transferring a bead member according to claim 1 or 2,
wherein the bead-core holding means and the bead-filler holding means respectively have a plurality of support means that support the bead core and a plurality of support means that support the end of the bead filler at a plurality of points in the circumferential direction of the bead member.

4. The apparatus for transferring a bead member according to claim 3,
wherein the support means of the bead-core holding means and the support means of the bead-filler holding means are configured to be joined together.

5. The apparatus for transferring a bead member according to claim 3 or 4,
wherein the plurality of support means of the bead-core holding means are support members capable of displacement in directions toward and away from one another, and
wherein the plurality of support members are brought into contact with an inside diameter portion of the bead core of the bead member to support the bead core.

6. A method for transferring a bead member in which the bead member formed by attaching a bead filler to the outer circumference of a bead core is moved and placed on a cartridge, the method comprising:
a step of holding the bead core of the bead member;
a step of holding an end of the bead filler of the bead member;
a step of moving the bead member to the cartridge while the bead core and the end of the bead filler are held;
a step of placing the moved bead member onto a placing surface of the cartridge; and
a step of releasing the holding of the bead core and the end of the bead filler of the bead member placed on the cartridge.

7. The method for transferring a bead member according to claim 6, further comprising:
a step of disposing the placing surface of the cartridge vertically,
wherein, in the step of placing, the bead member is brought into contact with the vertical placing surface of the cartridge to be placed thereon.

## Amended claims

### Amended claims under Art. 19.1 PCT

**1.** An apparatus for transferring a bead member, the apparatus moving and placing the bead member, which is formed by attaching a bead filler to the outer circumference of a bead core, on a cartridge, the apparatus comprising:
bead-core holding means for removably holding the bead core of the bead member;
bead-filler holding means for removably holding an end of the bead filler of the bead member;
moving means for simultaneously moving the bead-core holding means holding the bead member and the bead-filler holding means to the cartridge,
wherein the bead member is moved and transferred to the cartridge while being held at the bead core and the end of the bead filler.

**2.** The apparatus for transferring a bead member according to claim 1,
wherein the bead-filler holding means is suction holding means that holds the end of the bead filler with suction.

**3.** The apparatus for transferring a bead member according to claim 1 or 2,
wherein the bead-core holding means and the bead-filler holding means respectively have a plurality of support means that support the bead core and a plurality of support means that support the end of the bead filler at a plurality of points in the circumferential direction of the bead member.

**4.** The apparatus for transferring a bead member according to claim 3,
wherein the support means of the bead-core holding means and the support means of the bead-filler holding means are configured to be joined together.

**5.** The apparatus for transferring a bead member according to claim 3 or 4,
wherein the plurality of support means of the bead-core holding means are support members capable of displacement in directions toward and away from one another, and
wherein the plurality of support members are brought into contact with an inside diameter portion of the bead core of the bead member to support the bead core.

**6.** A method for transferring a bead member in which the bead member formed by attaching a bead filler to the outer circumference of a bead core is moved and placed on a cartridge, the method comprising:
a step of holding the bead core of the bead member;
a step of holding an end of the bead filler of the bead member;
a step of moving the bead member to the cartridge while the bead core and the end of the bead filler are held;
a step of placing the moved bead member onto a placing surface of the cartridge; and
a step of releasing the holding of the bead core and the end of the bead filler of the bead member placed on the cartridge.

**7.** The method for transferring a bead member according to claim 6, further comprising:
a step of disposing the placing surface of the cartridge vertically,
wherein, in the step of placing, the bead member is brought into contact with the vertical placing surface of the cartridge to be placed thereon.

**8.** (Added) The apparatus for transferring a bead member according to claim 1, further comprising:
separation assistance means that assists the separation of the formed bead member from a bead-member forming apparatus.

**9.** (Added) The apparatus for transferring a bead member according to claim 8,
wherein the separation assistance means is provided on the bead-core holding means.

**10.** (Added) The apparatus for transferring a bead member according to claim 8,
wherein the separation assistance means is a support member for the bead member, the support member being provided on the bead-core holding means and projecting radially outward.

**11.** (Added) The apparatus for transferring a bead member according to claim 1, further comprising:
deformation restriction means that supports the bead filler of the bead member to restrict deformation.

**12.** (Added) The apparatus for transferring a bead member according to claim 11,
wherein the deformation restriction means is provided on the bead-core holding means.

**13.** (Added) The apparatus for transferring a bead member according to claim 11,
wherein the deformation restriction means is a support member for the bead filler, the support member being provided on the bead-core holding means and projecting radially outward.

**14.** (Added) The method for transferring a bead member according to claim 6, further comprising:
a step of separating the formed bead member from a bead-member forming apparatus while the bead core and the end of the bead filler are held; and
a step of assisting the separation of the bead member by supporting the bead member and applying force in a separation direction during separation.

**15.** (Added) The method for transferring a bead member according to claim 14,
wherein, in the step of assisting the separation of the bead member, the bead member is supported in synchronization with the step of holding the bead core.

Statement under Art. 19.1 PCT
1. Content of the Amendment
 Claims 8 to 15 have been added.

2. Explanation
 Claims 8 to 15 have been added on the basis of, for example, paragraphs from [0041] to [0044] in Description and [FIG. 3], and on the basis of the description about the "projections 31T that protrude outward" that are provided at "the tips of the supporting pawls 31" and are simultaneously moved, and about the function of the "projections 31T" as a "support member" and a "separation assistance member and deformation restricting member (means)".
